**Europäisches Patentamt**

**European Patent Office**

**Office européen des brevets**

(11) Veröffentlichungsnummer: **0 234 000**

**A1**

(12) **EUROPÄISCHE PATENTANMELDUNG**

(21) Anmeldenummer: **86115682.6**

(22) Anmeldetag: **12.11.86**

(51) Int. Cl.⁴: **F16J 15/12** , **F16L 27/06** , **F01N 7/18**

(30) Priorität: **30.01.86 DE 3602691**

(43) Veröffentlichungstag der Anmeldung:
**02.09.87 Patentblatt 87/36**

(84) Benannte Vertragsstaaten:
**DE ES FR GB IT SE**

(71) Anmelder: **GOETZE AG**
**Bürgermeister-Schmidt-Strasse 17**
**D-5093 Burscheid 1(DE)**

(72) Erfinder: **Lönne, Klaus, Dipl.-Ing.**
**Bürgermeister-Schmidt-Strasse 50**
**D-5093 Burscheid(DE)**
Erfinder: **Majewski, Klaus-Peter, Dipl.-Ing.**
**Am Sportfeld 26**
**D-5093 Burscheid(DE)**

(54) **Dichtungsring.**

(57) Ein Dichtungsring (1) aus miteinander verpreßtem Fasermaterial und Gleitmitteln mit mindestens einer als Gleitfläche dienenden Mantelfläche für insbesondere gelenkig verbundene Auspuffsysteme ist an seinen überwiegend statisch beanspruchten Dichtflächen mit einem Trägerring (2) aus bevorzugt einem Stahlblech verbunden. Der Trägerring (2) besitzt bevorzugt ein im Querschnitt L-förmiges Profil, so daß die Dichtungsringe (1) beim Aufschieben auf das Rohrende (5,9,18), dessen axiale Anschlagflächen (6,10,17,22) bevorzugt lediglich durch Verdickungen oder Aufbeigungen des Rohrendes (5,9,18) gebildet sind, in radialer und axialer Richtung gleichmäßig mit geringer Kraft belastet und beim Einbau und im Betrieb nicht zerstört werden.

FIG. 1

EP 0 234 000 A1

## Dichtungsring.

Die Erfindung betrifft einen Dichtungsring mit mindestens einer als Gleitfläche dienenden Mantelfläche, wie insbesondere einen Dichtungsring zur Abdichtung gelenkig verbundener Rohrverbindungen in insbesondere Auspuffsystemen von Verbrennungskraftmaschinen, bestehend aus miteinander verpreßten Faserwerkstoffen aus vorzugsweise Metallfasern und Gleitmaterialien.

Auspuffsysteme von Verbrennungskraftmaschinen werden vielfach zur Vermeidung der Übertragung der vom Motor ausgehenden Schwingungen durch zwischen die Rohrenden des Abgassammelrohres und des Abgasauslaßrohres angeordnete Rohrkupplungssysteme nach dem Kugelpfannenprinzip gelenkig miteinander verbunden. Der dazwischen geschaltete Dichtungsring ist der Kontur des Kugel-bzw. Kugelhalbschalensegmentes angepaßt und bildet an mindestens einer seiner Mantelflächen die Gleitfläche zum aufgesetzten Rohrende, während die anderen Flächen als statische Abdichtflächen dienen.

Für diese Zwecke geeignete Dichtungsringe bestehen bewährtermaßen aus miteinander verpreßten Gleitmaterialien und Metallfasern, die entweder als gewickelte Metallfasergewebe mit einliegenden Gleitmittelfolien, als in Umfangsrichtung angeordnete lange Metallfasern oder als Metallwollfasern das Grundskelett der Dichtungsringe bilden und nach der Imprägnation mit Gleitmitteln zu Ringen fertig gepreßt werden. Bewährt haben sich auch Ringe, die direkt aus kurzfaserigen Metallfaser/Gleitmittelgemischen in der Form zu Ringen gepreßt sind.

Die so hergestellten Ringe sind elastisch oder plastisch noch so weit verformbar, daß sie sich beim Einbau unter dem Dichtpressungsdruck den Formungenauigkeiten der Aufnahme anpassen können, und sie sind im Betrieb beständig gegenüber den wechselnden Reibbelastungen und hohen Temperaturen im Auspuff.

Eine zerstörungsfreie Druckbelastbarkeit derartiger Ringe im Betriebszustand bei der Montage durch axiales Aufschieben auf das eine Rohrende setzt allerdings eine an den Ring angepaßte, axiale und radial Abstützung des Dichtungsringes im Sitz an der Dichtungsstelle voraus. So besteht beispielsweise nach der DE-PS 3.234.374 die axiale Anschlagfläche des Dichtungsringes aus einem am Auspuffrohr angeschweißten Ring, auf dessen radial abstehender Sitzfläche die montageseitige Stirnfläche des Dichtungsringes ganzflächig und planparallel aufliegt. Der Dichtungsring wird so durch die Montagekraft und den Dichtpressungsdruck gleichmäßig in axialer Richtung belastet, durch die Aufnahme des Ringes abgestützt, und Zerstörungen treten nicht auf.

Derartige Maßnahmen mit zusätzlichen und besonders am Rohrende befestigten Bauteilen sind allerdings in der Praxis meist zu aufwendig und kostspielig, so daß man die axialen Anschlagflächen des Dichtungsringes zum Aufschieben auf das Auspuffrohrende häufig beispielsweise durch einfache radiale Ausbuchtungen und Verdickungen oder durch konische Erweiterungen des Rohrendes hergestellt hat. Beim Aufschieben des Dichtungsringes auf das sich verdickende Rohrende bei der Montage und im Betrieb wird der Dichtungsring radial geweitet bzw. der auf der radialen Anschlagfläche nicht mehr ganzflächig planparallel aufliegende Dichtungsring wird ungleichmäßig in radialer Richtung belastet und zerstört. Die herkömmlichen Dichtungsringe sind dann unter derartigen Bedingungen nicht mehr stabil genug und können gegebenenfalls schon bei der Montage zerstört werden.

Der vorliegenden Erfindung liegt daher die Aufgabe zugrunde, einen Dichtungsring gemäß Oberbegriff des Hauptanspruches zu schaffen, der auch bei der Montage und während des motorischen Betriebes an schwierigen Dichtstellen nicht zerstört werden kann. Der Dichtungsring soll darüberhinaus einfach und kostensparend herstellbar sein.

Erfindungsgemäß wird diese Aufgabe durch einen Dichtungsring gemäß Oberbegriff des Hauptanspruches mit einem Trägerring gelöst, der mit den axialen und/oder den radialen, im Betriebszustnad statisch beanspruchten Dichtflächen des Dichtungsringes verbunden ist. Der Trägerring besteht bevorzugt aus einem für Auspuffrohre geeigneten und gegebenenfalls vergüteten und/oder beschichteten Stahlblech mit ausreichend hoher Temperatur-und Korrosionsfestigkeit, wobei die Dicke des verwendeten Stahlbleches und/oder die Abmessungen des Trägerringes, abgestimmt auf den jeweiligen Anwendungsfall, so ausgelegt sind, daß der Trägerring unter der Druckeinwirkung bei der Montage und im Betrieb nicht wesentlich verformt wird.

Der eingesetzte Trägerring bildet jetzt mit seinen axialen und radialen Auflageflächen einen Schutz des Dichtungsringes vor radialen und axialen Verformungen bei der Montage und während des motorischen Betriebes. Vor allem ungleichmäßige axiale Belastungen des Dichtungsringes beim Aufschieben des Ringes auf ein Rohrende mit ungleichmäßig ausgebildeter Anschlagfläche und radialen Aufweitungen des Ringes auf ein sich konisch verdickendes Rohrende werden vermieden, der Dichtungsring kann zerstörungssicher montiert werden und wird während des motorischen Betriebes nicht zerstört.

In der einfachsten Ausführungsform besitzt der Trägerring ein im Querschnitt L-förmiges Profil, wobei der radiale Schenkel die Auflagefläche der montageseitigen Stirnfläche des Dichtungsringes bildet, während der axiale Schenkel die statisch belastete Umfangsfläche des Dichtungsringes bevorzugt an seinem Innenumfang umhüllt. Gegebenenfalls sind aber vor allem zur Erhöhung der Belastbarkeit des Trägerringes seine radialen und/oder axialen Schenkel den radialen und/oder axialen Flächen des Rohrendes angepaßt, so daß die Schenkel einen entsprechend angepaßten gekrümmten Verlauf besitzen. Während bevorzugt die Schenkel des Trägerringes die statischen Dichtflächen des Dichtringes ganzflächig umgeben, ist es auch möglich, den Trägerring in Ausnehmungen der radialen und/oder axialen statischen Dichtungsringflächen anzuordnen. Das außerhalb der Ausnehmungen überstehende Dichtungsringmaterial liegt dann unmittelbar am Rohrende an und verbessert die statische Abdichtung zwischen Rohrende und Dichtungsring.

Bevorzugt ist der Dichtungsring bei der Herstellung auf den Trägerring aufgepreßt und gegebenenfalls unter Verwendung von Klebstoffen mit dem Trägerring vor allem drehfest verbunden. Im Sinne der Erfindung kann der Dichtungsring aber auch separat hergestellt und erst danach oder erst während der Montage mit dem Trägerring verbunden sein. Die drehfeste Verbindung von Trägerring und Dichtungsring kann, falls erforderlich, durch Aneinanderkleben und Verlöten oder durch an und für sich bekannte mechanische Verbindungen erfolgen.

Durch die Erfindung ist somit ein Dichtungsring für vor allem gelenkig verbundene Auspuffleitungen geschaffen, der vor Zerstörungen durch radiale und axiale Belastungen bei der Montage oder im Betrieb an schwierig gestalteten Dichstellen besonders gesichert ist. Der Ring ist einfach und kostensparend herstellbar, und er kann besonders vorteilhaft universell zerstörungssicher an vor allem aus Kostengründen einfach gestalteten Dichstellen in vor allem Auspuffanlagen von Verbrennungsmotoren eingesetzt werden.

Die Erfindung wird durch die fünf Abbildungen näher erläutert, die im Querschnitt Figuren erfindungsgemäßer, auf ein Auspuffrohrende aufgesteckter Dichtungsringe zeigen.

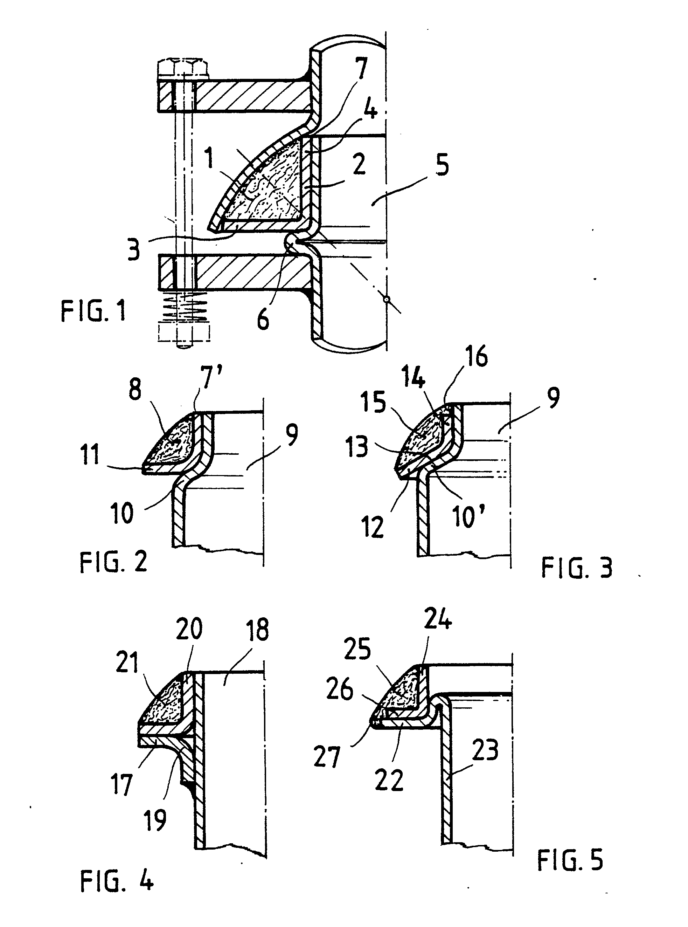

In Figur 1 ist (1) der Dichtungsring aus einem verpreßten Meallfaser/Gleitmittelgemisch und (2) der Trägerring aus Stahl, der ein L-förmiges Querschnittsprofil besitzt. Der Radialschenkel (3) des Trägerringes bildet die Auflage für die statisch belastete montageseitige Stirnfläche des Dichtungsringes (1), während der Axialschenkel (4) den Dichtungsring (1) am Innenumfang umgibt. In diesem Fall bildet eine Ausbuchtung (6) des Auspuffrohrendes (5) die Anschlagfläche des Ringes (1,2) beim Aufschieben auf das Rohr (5). Durch den die montageseitige Stirnfläche des Dichtungsringes (1) - schützenden Radialschenkel (3) des Trägerringes - (2) ist der Dichtungsring (1) vor ungleichmäßiger Belastung bei der Montage und im Betrieb und damit vor einer Zerstörung geschützt. In diesem Fall kann die Stirnfläche (7) des Axialschenkels (4) des Trägerringes (2) den Ansatzpunkt für einen Montagestempel beim axialen Aufschieben bilden, so daß der Dichtungsring (1) bei der Montage entlastet wird.

In Figur 2 wird die radiale Anschlagfläche des Dichtungsringes (8) am Rohrende (9) durch eine konische Verdickung (10) des Rohrendes gebildet. Der die statischen Dichtungsflächen des Dichtungsringes (8) umgebende Trägerring (11) schützt den Dichtungsring (8) vor allem vor einer radialen Aufweitung bei der Montage und damit vor einer Zerstörung.

Die Anschlagfläche (10') des Rohrendes (9) ist in Figure 3 wie in Figur 2 durch eine Verdickung des Rohrendes (9) gebildet. In diesem Fall ist der Radialschenkel (12) des Trägerringes (13) der Verdickung (10') angepaßt und damit höher belastbar. Der Axialschenkel (14) des Trägerringes (13) ist zugleich in einer Ausnehmung des Dichtungsringes (15) angeordnet, so daß der überstehende Teil - (16) des Dichtungsringes (15) am Rohrende (9) anliegt und dort die statische Abdichtung verbessert.

In Figur 4 wird die axiale Anschlagfläche (17) am Rohrende (18) durch einen angeschweißten, radial abstehenden Ring (19) gebildet. Der Trägerring (20) schützt den Dichtungsring (21) vor ungleichmäßiger Belastung und einer Zerstörung.

In Figur 5 ist die axiale Anschlagfläche (22) durch eine radiale Abbiegung des Rohrendes (23) gebildet. Der Trägerring (24) schützt den Dichtungsring (25) vor axialen und radialen Verformungen bei der Montage und im Betrieb. Der Radialschenkel (26) des Trägerringes (24) ist gleichzeitig in einer Ausnehmung des Dichtungsringes (25) angeordnet, so daß der überstehende Bereich (27) des Dichtungsringes (25) die statische Abdichtung an der Anschlagfläche (22) verstärkt.

## Ansprüche

1. Dichtungsring mit mindestens einer als Gleitfläche dienenden Mantelfläche, wie insbesondere einem Dichtungsring zur Abdichtung gelenkig verbundener Rohrverbindungen in insbesondere Auspuffsystemen von Verbrennungskraftmaschinen, bestehend aus miteinander verpreßten Fasern aus vorzugsweise Metall und Gleitmaterialien sowie gegebenenfalls Zusatzstoffen, dadurch gekennzeichnet, daß der Dichtungsring (1,8,15,20,25) einen Trägerring (3,11,13,20,24) besitzt, der mit den im Betriebszustand statisch beanspruchten Dichtflächen des Dichtungsringes (3,11,13,20,24) verbunden ist.

2. Dichtungsring nach Anspruch 1, dadurch gekennzeichnet, daß der Trägerring (3,11,13,20,24) aus einem gegebenenfalls vergüteten und/oder beschichteten, korrosionsfesten und temperaturbeständigen Stahlblech besteht.

3. Dichtungsring nach den Ansprüchen 1 oder 2, dadurch gekennzeichnet, daß der Trägerring (3,11,13,20,24) ein im Querschnitt L-förmiges Profil mit einem Radialschenkel (3,12,26) und einem Axialschenkel (4) besitzt.

4. Dichtungsring nach mindestens einem der Ansprüche 1 bis 3 dadurch gekennzeichnet, daß mindestens ein Schenkel (3,12,26,4) des Trägerringes (11,13) in seinem Verlauf der Anschlagfläche (10) am Auspuffrohrende angepaßt ist und entsprechend gekrümmt verläuft.

5. Dichtungsring nach mindestens einem der Ansprüche 1 bis 4, dadurch gekennzeichnet, daß mindestens ein Schenkel (14,26) des Trägerringes (13,24) in einer Ausnehmung des Dichtungsringes - (15,25) eingelagert ist, so daß der überstehende Bereich (16,27) des Dichtungsringes (15,25) am Rohrende (9) und/oder der Anschlagfläche (22) anliegt und dort die statische Abdichtung verbessert.

6. Dichtungsring nach den Ansprüchen 1 bis 5, dadurch gekennzeichnet, daß der Dichtungsring - (1,8,15,20,25) mit dem Trägerring (2,11,13,24,20) kraftschlüssig und/oder haftschlüssig verbunden ist.

7. Dichtungsring nach mindestens einem der Ansprüche 1 bis 6, dadurch gekennzeichnet, daß die Stirnfläche (7) des Axialschenkels (4) im Trägerring (2 ) die Ansatzfläche für ein Montagewerkzeug für das axiale Aufschieben des Ringes - (1,2) auf das Rohrende (5) bildet.

8. Dichtungsring nach mindestens einem der Ansprüche 1 bis 7, dadurch gekennzeichnet, daß die Wandstärke des Trägerbleches (2,11,13,24,20), abgestimmt auf den Anwendungsfall, so bemessen ist, daß der Trägerring (3,11,13,24,20) unter dem Druck der Montage oder im Betrieb verformungsstabil ist.

FIG. 1

FIG. 2

FIG. 3

FIG. 4

FIG. 5

Europäisches Patentamt

**EUROPÄISCHER RECHERCHENBERICHT**

Nummer der Anmeldung

EP 86 11 5682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | FR-A-2 490 778 (GOETZE A.G.)<br>* Figuren 1,6; Patentansprüche 1,4,6,8 * | 1 | F 16 J 15/12<br>F 16 L 27/06<br>F 01 N 7/18 |
| A | | 4,6 | |
| | --- | | |
| A | US-A-4 209 177 (J.F. HALL)<br>* Figur 1; Zusammenfassung * | 1 | |
| | --- | | |
| A | DE-A-2 721 663 (UNI-CARDAN)<br>* Figur 5; Seite 7, Zeilen 3-5 * | 2,3 | |
| | ----- | | |

RECHERCHIERTE SACHGEBIETE (Int. Cl.4)

F 16 J
F 16 L
F 01 N

Der vorliegende Recherchenbericht wurde für alle Patentansprüche erstellt.

| Recherchenort | Abschlußdatum der Recherche | Prüfer |
|---|---|---|
| DEN HAAG | 08-05-1987 | NARMINIO A. |